# EUROPÄISCHE PATENTSCHRIFT

(11) **EP 2 054 964 B1**
(45) Veröffentlichungstag und Bekanntmachung des Hinweises auf die Patenterteilung: **29.12.2010**
(21) Anmeldenummer: 07817462.0
(22) Anmeldetag: 23.08.2007
(51) Int. Cl.: H01M 8/02, H01M 8/24

(54) **WIEDERHOLEINHEIT FÜR EINEN STAPEL ELEKTROCHEMISCHER ZELLEN, SOWIE STAPELANORDNUNG**
REPETITION UNIT FOR A STACK OF ELECTROCHEMICAL CELLS AND STACK ARRANGEMENT
UNITÉ DE RÉPÉTITION POUR UN EMPILEMENT DE CELLULES ÉLECTROCHIMIQUES ET SON EMPILEMENT

(30) Priorität: 23.08.2006 DE 102006040030
(43) Veröffentlichungstag der Anmeldung: 06.05.2009
(73) Patentinhaber: Fraunhofer-Gesellschaft zur Förderung der angewandten Forschung e.V., 80686 München (DE)
(72) Erfinder: KUSNEZOFF, Mihails, 01159 Dresden (DE); MICHAELIS, Alexander, 01217 Dresden (DE); STELTER, Michael, 09247 Röhrsdorf (DE)
(74) Vertreter: Pfenning, Meinig & Partner GbR
(86) Internationale Anmeldenummer: PCT/DE2007/001540
(87) Internationale Veröffentlichungsnummer: WO 2008/022638

(56) Entgegenhaltungen:
- EP-A- 1 401 040
- DE-A1- 4 016 157

## Beschreibung

Die vorliegende betrifft eine Wiederholeinheit für einen Stapel elektrochemischer Zellen, die eine Kathoden-Elektrolyt-Anoden-Einheit sowie eine erste Lage einer an der Kathoden-Elektrolyt-Anoden-Einheit anliegenden Interkonnektorplatte und mindestens eine weitere Lage der Interkonnektorplatte umfasst, nach dem Oberbegriff des Anspruchs 1. Die Erfindung betrifft ferner eine zumindest zwei solcher Wiederholeinheiten umfassende Stapelanordnung elektrochemischer Zellen sowie ein Verfahren zum Herstellen einer derartigen Wiederholeinheit.

Bei einer gattungsgemäßen Wiederholeinheit ist die erste Lage der Interkonnektorplatte aus elektrischleitfähigem Material gefertigt und steht mit der Kathoden-Elektrolyt-Anoden-Einheit in elektrischem Kontakt, wobei die mindestens eine weitere Lage in einem aktiven Bereich der entsprechenden elektrochemischen Zelle, bei der es sich um eine Brennstoffzelle oder auch eine Elektrolysezelle handeln kann, ausgespart ist. Derartige Wiederholeinheiten werden typischerweise zu einem Stapel oder Stack zusammengefasst, in dem die Wiederholeinheiten in einer Stapelrichtung aufeinander folgend angeordnet sind. Die dann zwischen aufeinander folgenden elektrochemischen Zellen angeordneten Interkonnektorplatten dienen einem Elektronentransport zwischen einer Anode einer elektrochemischen Zelle und einer Kathode einer darauf folgenden elektrochemischen Zelle. Abgeschlossen wird ein derartiger Stapel normalerweise durch zwei Endplatten (Deckplatte und Grundplatte) von denen im Fall eines Brennstoffzellenstapels ein Elektronenstrom für einen externen Stromkreislauf abgegriffen werden kann.

Gattungsgemäße Wiederholeinheiten sind beispielsweise aus der Druckschrift DE 100 44 703 A1 bekannt. Gegenüber herkömmlichen Brennstoffzelleneinheit mit Interkonnektorplatten, die aus zur Bildung einer Kanalstruktur für Betriebsmittel (Brenngas und Oxidant) erodierten oder gefrästen metallischen Vollplatten bestehen, soll eine Wiederholeinheit der in der genannten Druckschrift vorgeschlagenen Art mit weniger Aufwand herstellbar sein. Es zeigt sich jedoch, dass sich die Lagen der Interkonnektorplatte einer solchen Wiederholeinheit nach dem Stand der Technik beim Verbinden der Lagen verwerfen, weshalb sie in einem zusätzlichen Schritt geglüht und zu einem planparallelen Zustand zurückgeformt werden müssen.

Außerdem ist in der EP 1 401 040 A1 ein Brennstoffzellemodul beschrieben, bei dem eine Kathoden-Elektrolyt-Anoden-Einheit mit mehreren Blechen miteinander verlötet sind, dabei eine Brennstoffzelle bilden und mehrere solcher Brennstoffzellen zu Stapeln zusammengefasst werden können.

Aus DE 40 16 157 A1 sind Hochtemperaturbrennstoffzellen bekannt, die ebenfalls in gestapelter Form elektrisch in Reihe verschaltet sein können. Für die elektrisch leitende Verbindung wird darin vorgeschlagen elektrisch leitende vollelastische Stromkollektoren einzusetzen.

Der vorliegenden Erfindung liegt nun die Aufgabe zugrunde, eine vergleichbare Wiederholeinheit vorzuschlagen, die sich dadurch noch einfacher herstellen lässt, dass ein derartiger zusätzlicher Verfahrensschritt überflüssig wird. Der Erfindung liegt ferner die Aufgabe zugrunde, ein entsprechendes Herstellungsverfahren für eine Wiederholeinheit und eine dementsprechend aufwandsarm herstellbare Stapelanordnung elektrochemischer Zellen vorzuschlagen.

Diese Aufgabe wird erfindungsgemäß gelöst durch eine Widerholeinheit mit den kennzeichnenden Merkmalen des Anspruchs 1 in Verbindung mit den Merkmalen des Oberbegriffs des Anspruchs 1 sowie durch eine Stapelanordnung mit den Merkmalen des Anspruchs. Vorteilhafte Ausgestaltungen und Weiterentwicklungen der Erfindung ergeben sich mit den Merkmalen der Unteransprüche.

Eine besonders einfache Herstellbarkeit der vorgeschlagenen Wiederholeinheit ergibt sich dadurch, dass die mindestens eine weitere Lage der Interkonnektorplatte aus einem ungeformten ebenen Material gebildet ist, wobei auch die erste - aus einem elektrisch leitfähigen Material wie beispielsweise Blech gefertigte - Lage der Interkonnektorplatte in einem den aktiven Bereich umgebenden Randbereich ungeformt, also eben ist und die Kathoden-Elektrolyt-Anoden-Einheit sowie alle genannten Lagen der Interkonnektorplatte im Randbereich miteinander verlötet sind. Die weitere Lage der Interkonnektorplatte kann bei typischen Ausführungen der Erfindung zwischen der genannten ersten Lage und der Kathoden-Elektrolyt-Anoden-Einheit angeordnet sein. Bevorzugte Ausführungen der Erfindung sehen vor, dass zusätzlich eine weitere Lage der Interkonnektorplatte auf einer der Kathoden-Elektrolyt-Anoden-Einheit abgewandten Seite der ersten Lage der Interkonnektorplatte angeordnet ist. Alternativ oder zusätzlich kann eine typischerweise im aktiven Bereich ausgesparte Lage einer nächsten Interkonnektorplatte auf einer den bislang genannten Lagen abgewandten Seite der Kathoden-Elektrolyt-Anoden-Einheit angeordnet sein, die ebenfalls aus einem ungeformten ebenen Material gebildet und im Randbereich mit der Kathoden-Elektrolyt-Anoden-Einheit verlötet ist. Dadurch kann ein durch unterschiedliche thermische Ausdehnungskoeffizienten der Lagen der Interkonnektorplatte und der Kathoden-Elektrolyt-Anoden-Einheit verursachte Verformung beim Verlöten noch besser verhindert werden.

Das entsprechende vorteilhafte Verfahren zum Herstellen einer solchen Wiederholeinheit sieht vor, dass jeweils auf mindestens einer von zwei später aneinander anliegenden Oberflächen zweier Lagen der Interkonnektorplatte oder der Kathoden-Elektrolyt-Anoden-Einheit und einer Interkonnektorplattenlage eine Lötpaste aufgetragen wird, wonach die genannten Lagen und die Kathoden-Elektrolyt-Anoden-Einheit durch Aufeinanderlegen und eventuell Anpressen vormontiert werden, wobei die genannten Lagen und die Kathoden-Elektrolyt-Anoden-Einheit anschließend durch ein gemeinsames Erhitzen miteinander verlötet werden. Als Lötpaste kann dabei jeweils ein Metalllot und/oder ein Glaslot verwendet werden, so dass aufeinander folgenden Lagen der Interkonnektorplatte oder die Kathoden-Elektrolyt-Anoden-Einheit und die daran anliegende Lage jeweils durch Glaslot und/oder Metalllot miteinander verbunden sind. Das Vormontieren kann am einfachsten bei Raumtemperatur erfolgen. Zum Verlöten können die genannten Lagen mit der Kathoden-Elektrolyt-Anoden-Einheit in einem Ofen als ganze erhitzt werden, wobei das Verlöten vorzugsweise durch Glühen bei einer Temperatur von zwischen 600°C und 1100°C erfolgt.

Die Kathoden-Elektrolyt-Anoden-Einheit umfasst typischerweise eine Kathodenschicht, eine Elektrolytschicht und eine Anodenschicht sowie eventuell zusätzlich eine als Träger dienende poröse Metallschicht. Statt einer solchen Metallschicht kann aber auch die Kathodenschicht, die Elektrolytschicht oder die Anodenschicht selbst als der Kathoden-Elektrolyt-Anoden-Einheit Halt gebender Träger dienen. Die Elektrolytschicht ist bei typischen Ausführungen der Erfindung durch eine Festelektrolyt-Membran gegeben, wobei es sich bei den entsprechenden elektrochemischen Zellen um Hochtemperaturbrennstoffzellen handeln kann, die Betriebstemperaturen von über 500°C, vorzugsweise Betriebstemperaturen von über 600°C haben. Als Festelektrolyte eignen sich insbesondere verschiedene Oxide. Eine entsprechende Hochtemperaturbrennstoffzelle wird auch als SOFC (Solid Oxide Fuel Cell) bezeichnet. Bei einer Herstellung von Wiederholeinheiten für solche Hochtemperaturbrennstoffzellen kommt der Vorteil der vorliegenden Erfindung besonders zum Tragen, weil auch zur Herstellung entsprechender Wiederholeinheiten sehr hohe Temperaturen erforderlich sind, was wiederum ein Verhindern von mit der vorliegenden Erfindung vermeidbaren Verformungen schwierig macht.

Zwischen der ersten Lage der Interkonnektorplatte und der Kathoden-Elektrolyt-Anoden-Einheit kann ein an beiden anliegendes und einen elektrischen Kontakt zwischen beiden vermittelndes leitfähiges poröses Kontaktelement vorgesehen sein. Ein entsprechendes Kontaktelement kann auch auf eine der ersten Lage der Interkonnektorplatte abgewandten Seite der Kathoden-Elektrolyt-Anoden-Einheit an dieser anliegend angeordnet sein, um einen elektrischen Kontakt zu einer Interkonnektorplatte einer nächsten Wiederholeinheit zu vermitteln. Ein solches Kontaktelement kann also jeweils anodenseitig oder kathodenseitig an der Kathoden-Elektrolyt-Anoden-Einheit, genauer an der Anodenschicht bzw. der Kathodenschicht, anliegen. Neben dem elektrischen Kontakt zwischen der Anodenschicht bzw. der Kathodenschicht und der anliegenden Interkonnektorplatte erlaubt ein solches Kontaktelement ein Hindurchströmen eines Reaktandengases oder eines Reaktionsprodukts, auch wenn die einen elektrischen Kontakt zu einer nächsten elektrochemischen Zelle vermittelnde erste Lage der Interkonnektorplatte selbst keine Kanalstruktur aufweist. Daher kann die erste Lage der Interkonnektorplatte - das Gleiche gilt auch für eventuell vorhandene weitere durchgehenden Lagen der Interkonnektorplatte - aus einem vollständig ungeformten, vollständig ebenen Blech bestehen. Dadurch ergeben sich eine besonders aufwandsarme Herstellung und eine besonders effektive Vermeidung von Verformungen beim Verlöten.

Das genannte poröse Kontaktelement kann bei bevorzugten Ausführungen der Erfindung aus Nickel-Schaum, der besonders leitfähig und korrosionsbeständig ist, oder aus einem anderen porösen Metallsubstrat oder einem vorteilhaft temperaturbeständigen Cermet-Substrat (Keramik-Metall-Gemisch) bestehen. Ein derartiges Kontaktelement kann beispielsweise durch Foliengießen und anschließendes Sintern hergestellt werden. In einer anderen Ausführung der Erfindung kann das Kontaktelement auch aus einem Drahtgeflecht gefertigt sein, das hier auch als porös bezeichnet sei. Bei der Herstellung der Wiederholeinheit kann ein solches Kontaktelement vorzugsweise vor dem Aufeinanderlegen der Lagen und der Kathoden-Elektrolyt-Anoden-Einheit an der Kathoden-Elektrolyt-Anoden-Einheit oder an einer Lage - typischerweise der ersten Lage - der Interkonnektorplatte angeschweißt (vorzugsweise durch Punktschweißen) oder angelötet werden. Stattdessen kann das Kontaktelement auch nur lose in einen Hohlraum zwischen der Kathoden-Elektrolyt-Anoden-Einheit und der ersten Lage der Interkonnektorplatte eingelegt werden.

Wie die erste Lage der Interkonnektorplatte kann auch die mindestens eine weitere Lage aus Blech, vorzugsweise aus besonders korrosionsarmem Stahl, gefertigt sein. Wenn die verschiedenen Lagen der Interkonnektorplatte aus einem einzigen Material gefertigt sind, lassen sich Verformungen besonders gut vermeiden. Es kann aber auch vorgesehen sein, dass die mindestens eine weitere Lage der Interkonnektorplatte - das Gleiche gilt für eine eventuell vorhandene Lage einer nächsten Interkonnektorplatte auf einer gegenüberliegenden Seite der Kathoden-Elektrolyt-Anoden-Einheit - aus Keramik gefertigt ist. Dadurch ergeben sich ein thermisch besonders stabiler Aufbau und eine im Randbereich wünschenswerte gute elektrische Isolierung zwischen den verschiedenen Lagen. Typische Ausführungen der Erfindung sehen vor, dass die verschiedenen Lagen der Interkonnektorplatte eine Dicke von jeweils zwischen 0,1 mm und 1 mm haben. Wiederholeinheiten mit so dimensionierten Interkonnektorplattenlagen eignen sich insbesondere zum Herstellen von portablen SOFC-Stacks oder anderen portablen Stapeln elektrochemischer Zellen.

Dabei weisen sowohl die Kathoden-Elektrolyt-Anoden-Einheit als auch die Lagen der Interkonnektorplatte im Randbereich Ausnehmungen für eine Reaktandenzufuhr bzw. einer Reaktionsproduktabfuhr auf. So ist an einer Anodenseite der Kathoden-Elektrolyt-Anoden-Einheit ein Brenngas wie beispielsweise Wasserstoff und and einer Kathodenseite ein Oxidationsmittel wie beispielsweise Luft oder Sauerstoff zuzuführen. Als Reaktionsprodukt ist beispielsweise Wasser abzuführen, im Fall einer typischen SOFC mit einer anionen-leitenden Elektrolytmembran an der Anodenseite. Durch unterschiedliche Zuschnitte der Lagen der Interkonnektorplatte lässt sich in einfacher Weise eine entsprechende Reaktandenzufuhr und Reaktionsproduktabfuhr realisieren. Im Randbereich der Kathoden-Elektrolyt-Anoden-Einheit und der Lagen der Interkonnektorplatte können außerdem, vorzugsweise jeweils in einer Ecke, Ausnehmungen für Anker vorgesehen sein, die zum Zusammenhalten eines entsprechenden Stapels mehrerer Wiederholeinheiten dienen können. Solche Ausnehmungen können, wie auch eine Aussparung von Lagen der Interkonnektorplatte im aktiven Bereich, dadurch realisiert werden, dass sie vor dem Montieren der Wiederholeinheit ausgestanzt oder ausgeschnitten werden, in besonders einfacher Weise beispielsweise durch Laserschneiden oder durch Elektronenstrahlschneiden.

Das weiter oben genannte Merkmal einer Verwendung ungeformter ebener Bleche oder Materialien für die Lagen der Interkonnektorplatte ist nicht als Widerspruch zu einem eventuellen Ausstanzen oder Ausschneiden von Ausnehmungen oder Aussparungen zu verstehen, sondern als Verzicht auf einen Umformprozess der genannten Materialien dort, wo sich nicht ausgespart sind. Der Begriff Löten wiederum ist, wie sich auch aus dem Vorstehend ergibt, so allgemein zu verstehen, dass er auch Glaslöten umfasst. Auch ist es unproblematisch, wenn ein Lot mit einer Schmelztemperatur verwendet wird, die im Bereich einer Betriebstemperatur der elektrochemischen Zellen liegt.

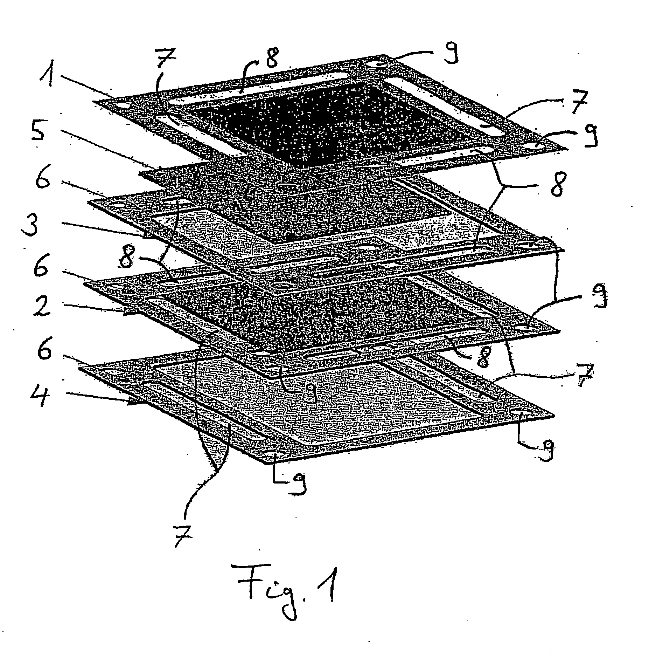

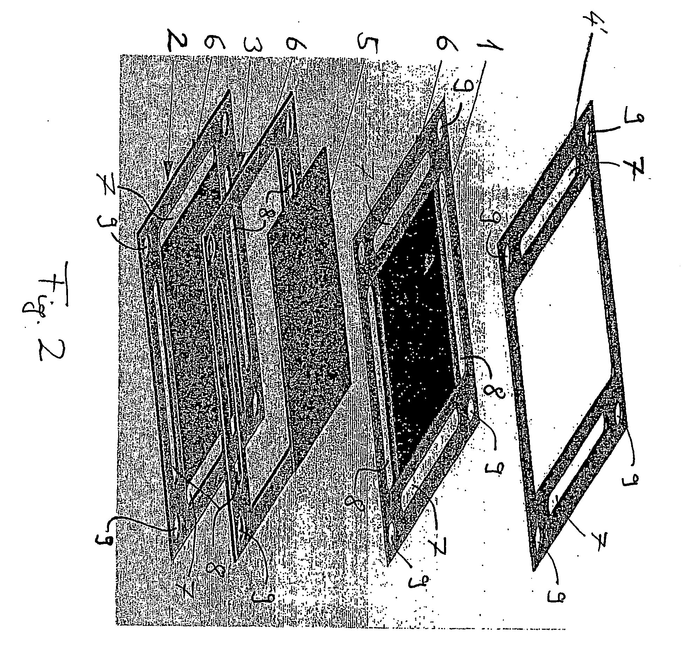

Ausführungsbeispiele der vorliegenden Erfindung werden nachfolgend anhand der Figuren 1 und 2 beschrieben. Es zeigt
- Fig. 1: eine Explosionsdarstellung einer erfin- dungsgemäßen Wiederholeinheit für einen Stapel elektrochemischer Zellen, und
- Fig. 2: eine entsprechende Darstellung einer Wie- derholeinheit in einer anderen Ausführung der Erfindung.

Als Bestandteile einer Wiederholeinheit für einen Stapel von Hochtemperaturbrennstoffzellen, genauer für einen SOFC-Stack, zeigt Fig. 1 eine Kathoden-Elektrolyt-Anoden-Einheit 1, die neben einer Festelektrolyt-Membran als Elektrolytschicht an einer Oberseite eine Kathodenschicht und an einer Unterseite eine Anodenschicht aufweist, eine aus einem ebenen Blech gestanzte oder durch Laser- oder Elektronenstrahlschneiden zugeschnittene erste Lage 2 einer Interkonnektorplatte sowie eine zwischen der Kathoden-Elektrolyt-Anoden-Einheit 1 und der ersten Lage 2 angeordnete weitere Lage 3 der Interkonnektorplatte und eine zusätzliche weitere Lage 4 der Interkonnektorplatte, die auf einer der Kathoden-Elektrolyt-Anoden-Einheit 1 abgewandten Seite der ersten Lage 2 angeordnet ist. Die weiteren Lagen 3 und 4 der Interkonnektorplatte sind in einem aktiven Bereich, d.h. in einem Bereich, der mit einem aktiven Bereich der entsprechenden elektrochemischen Zelle in Deckung liegt, ausgespart und bestehen wie die erste Lage 2 aus ungeformtem ebenen Stahlblech. Stattdessen können die weiteren Lagen 3 und 4 auch aus ebenen Keramikschichten gefertigt sein. Ein durch die Aussparung der weiteren Lage 3 im aktiven Bereich zwischen der Kathoden-Elektrolyt-Anoden-Einheit 1 und der ersten Lage 2 gebildeter Hohlraum nimmt ein leitfähiges poröses Kontaktelement 5 auf, das einen elektrischen Kontakt zwischen der Anodenschicht der Kathoden-Elektrolyt-Anoden-Einheit 1 und der ersten Lage 2 der Interkonnektorplatte vermittelt und gleichzeitig ein Hindurchströmen von zuzuführenden Reaktanden und abzuführenden Reaktionsprodukten erlaubt. Ein entsprechendes Kontaktelement kann auch auf einer der Kathoden-Elektrolyt-Anoden-Einheit 1 abgewandten Seite der ersten Lage 2 vorgesehen und wie das Kontaktelement 5 unter Umständen durch Punktschweißen mit der ersten Lage 2 verbunden sein.

In einem den aktiven Bereich umgebenden Randbereich sind die Kathoden-Elektrolyt-Anoden-Einheit 1 und die Lagen 2, 3 und 4 der Interkonnektorplatte miteinander verlötet. Dazu ist jeweils auf einer Oberseite der ersten Lage 2 sowie der weiteren Lagen 3 und 4 der Interkonnektorplatte eine Lötpaste 6 aufgetragen, bei der es ich um Metalllot und/oder Glaslot handeln kann.

Bei der Herstellung der in der Fig. 1 dargestellten Wiederholeinheit wird zunächst die Lötpaste 6 im Randbereich der Lagen 2, 3 und 4 der Interkonnektorplatte aufgetragen, wonach die genannten Lagen 2, 3 und 4 mit dem Kontaktelement 5 sowie die Kathoden-Elektrolyt-Anoden-Einheit 1 übereinander gelegt und vormontiert werden, wonach ein so entstandenes Ensemble in einem Ofen vollständig auf eine Temperatur von zwischen 600°C und 1100°C erhitzt und so durch Glühen miteinander verlötet wird. Dabei kann auch das Kontaktelement 5 und ein eventuell vorhandenes und in der Fig. 1 nicht dargestelltes weiteres Kontaktelement mit der Kathoden-Elektrolyt-Anoden-Einheit oder der ersten Lage 2 der Interkonnektorplatte verlötet werden.

Das poröse Kontaktelement 5 besteht aus einem Nickel-schaum. Bei anderen Ausführungen der Erfindung kann das Kontaktelement 5 auch aus einem anderen porösen Metallsubstrat, einem Cermet-Substrat oder einem Drahtgeflecht gefertigt sein. Das Gleiche gilt für ein eventuell vorhandenes zusätzliches Kontaktelement an einer Unterseite der ersten Lage 2 zum Kontaktieren einer Kathodenseite einer angrenzenden Wiederholeinheit. Zum Herstellen des Kontaktelements 5 und entsprechender weiterer Kontaktelemente eignet sich insbesondere Foliengießen und anschließendes Sintern.

Im Randbereich weisen die Kathoden-Elektrolyt-Anoden-Einheit 1, die erste Lage 2 und die weitere Lage 4 erste längliche Ausnehmungen 7 auf zum Zuführen eines Brenngases, vorzugsweise von Wasserstoff, in eine durch die weitere Lage 3 definierte Ebene und zum Abführen eines Reaktionsprodukts, typischerweise von Wasser, aus dieser Ebene, die eine Anodenseite der Kathoden-Elektrolyt-Anoden-Einheit 1 definiert. Zum Zuführen eines Oxidanten, der durch Luft oder Sauerstoff gegeben sein kann, sowie zum Abführen von überschüssigem Oxidantengas weisen dementsprechend die Kathoden-Elektrolyt-Anoden-Einheit 1, die weitere Lage 3 und die erste Lage 2 in verbleibenden Bereichen des Randbereichs zweite längliche Ausnehmungen 8 auf, durch die ein Zuführen des Oxidanten in eine durch die weitere Lage 4 definierte Ebene möglich wird, die eine Kathodenseite einer - nach Bildung eines Stapels aus mehreren solchen Wiederholeinheiten - angrenzenden weiteren Wiederholeinheit definiert. Zusätzlich ist in vier Ecken sowohl der Kathoden-Elektrolyt-Anoden-Einheit 1 als auch der Lagen 2, 3 und 4 der Interkonnektorplatte jeweils eine runde Ausnehmung 9 vorgesehen, die ein Verspannen eines aus mehreren derartigen Wiederholeinheiten gebildeten Stapels mit vier Ankern erlauben. Ein solcher Stapel umfasst typischerweise eine Vielzahl von Wiederholeinheiten der abgebildeten Art, die unter Umständen zusätzlich miteinander verklebt oder verlötet sein können.

Die Ausnehmungen 7, 8 und 9 in der Kathoden-Elektrolyt-Anoden-Einheit 1 und den Lagen 2, 3 und 4 der Interkonnektorplatte sind zuvor ausgeschnitten oder ausgestanzt worden, im Fall der Lagen 2, 3 und 4 aus ebenen Blechzuschnitten einer Dicke von etwa 0,5 mm. Die Kathoden-Elektrolyt-Anoden-Einheit 1 ist im vorliegenden Ausführungsbeispiel elektrolyt-getragen. Denkbar wären aber auch kathoden- oder anodengetragene Kathoden-Elektrolyt-Anoden-Einheiten oder auch solche, die mit einem porösen Metallsubstrat eine eigene Trägerlage aufweisen.

Bei der in der Fig. 2 dargestellten Wiederholeinheit sind gleiche Merkmale wieder mit den selben Bezugszeichen versehen. Ein Unterschied zu dem Ausführungsbeispiel aus der Fig. 1 ergibt sich nur dadurch, dass anstelle der weiteren Lage 4 der Interkonnektorplatte, die die unterste Lage der Wiederholeinheit in der Fig. 1 bildet, hier eine entsprechende weitere Lage 4' einer Interkonnektorplatte vorgesehen ist, deren übrige Lagen zu einer weiteren entsprechenden Wiederholeinheit gehören, die im Fall einer Stapelbildung oben auf die in der Fig. 2 dargestellte Wiederholeinheit aufgelegt wird. Die Lage 4' dieser nächsten Interkonnektorplatte wird im vorliegenden Fall kathodenseitig anliegend mit der Kathoden-Elektrolyt-Anoden-Einheit 1 verlötet. Lötpaste 6 ist bei diesem Ausführungsbeispiel jeweils im Randbereich auf einer Oberseite der ersten Lage 2 und der weiteren Lage 3 sowie der Kathoden-Elektrolyt-Anoden-Einheit 1 aufgetragen.

Die Kathoden-Elektrolyt-Anoden-Einheit 1 ist bei dem in der Fig. 2 gezeigten Ausführungsbeispiel also zwischen zwei Interkonnektorblechen, nämlich zwischen der weiteren Lage 3 und der zur nächsten Interkonnektorplatte gehörigen Lage 4', beidseitig eingespannt, wodurch eine durch unterschiedliche Ausdehnungskoeffizienten der Bleche und der Kathoden-Elektroly-Anoden-Einheit verursachte Verbiegung der Wiederholeinheit bei der Herstellung noch besser vermeidbar ist.

Auch das Ausführungsbeispiel aus der Fig. 2 zeigt also einen schematischen Aufbau einer Wiederholeinheit für portable Hochtemperaturbrennstoffzellen. Die Wiederholeinheit weist wieder eine Elektrolyt-getragene Kathoden-Elektrolyt-Anoden-Einheit 1 mit Luft- bzw. Sauerstoffelektrode auf der Oberseite auf. Die Elektrolytschicht dieser Kathoden-Elektrolyt-Anoden-Einheit 1 ist so vorkonstruiert, dass sie die Durchbrüche bzw. Ausnehmungen 7 und 8 für die Brenngasund Luftzuführung an die Elektroden enthält. Den Interkonnektor (die Interkonnektorplatte) bilden im fertigen Stapel die entsprechend zugeschnittenen metallischen Bleche mit einer Dicke von 0,5 mm. Die Lotpaste 6 ist, wie auch beim Ausführungsbeispiel aus der Fig. 1, durch Siebdruck aufgetragen und realisiert die Verbindung zwischen den Lagen 2, 3 und 4' sowie der Kathoden-Elektrolyt-Anoden-Einheit 1 durch einen Lotprozess. Das Kontaktelement 5, dargestellt ist wieder nur ein Anodenkontaktelement, ist wieder aus Nickel-Schaum oder einem Nickel-Vlies hergestellt und durch Punktschweißen mit der ersten Lage 2 des Interkonnektors mechanisch und elektrisch verbunden.

## Patentansprüche

1. Wiederholeinheit für einen Stapel elektrochemischer Zellen, umfassend eine Kathoden-Elektrolyt-Anoden-Einheit (1) sowie eine erste Lage (2) und mindestens eine weitere Lage (3, 4) einer an der Kathoden-Elektrolyt-Anoden-Einheit (1) anliegenden Interkonnektorplatte, wobei die erste Lage (2) der Interkonnektorplatte aus elektrisch leitfähigem Material gefertigt ist und mit der Kathoden-Elektrolyt-Anodeneinheit (1) in elektrischem Kontakt steht, während die mindestens eine weitere Lage (3, 4) in einem aktiven Bereich ausgespart ist, dabei
die mindestens eine weitere Lage (3, 4) aus einem ungeformten ebenen Material besteht, wobei auch die erste Lage (2) der Interkonnektorplatte zumindest in einem den aktiven Bereich umgebenden Randbereich ungeformt ist und die Lagen (2, 3, 4) der Interkonnektorplatte im Randbereich Ausnehmungen (7, 8) für eine Reaktandenzufuhr oder Reaktionsproduktabfuhr aufweisen,
**dadurch gekennzeichnet, dass** die Kathoden-Elektrolyt-Anoden-Einheit (1) sowie alle genannten Lagen (2, 3, 4) der Interkonnektorplatte im den aktiven Bereich umgebenden Randbereich miteinander verlötet sind und die Kathoden-Elektrolyt-Anodeneinheit (1) im Randbereich Ausnehmungen (7, 8) für eine Reaktandenzufuhr oder Reaktionsproduktabfuhr aufweist.

2. Wiederholeinheit nach Anspruch 1, **dadurch gekennzeichnet, dass** die Kathoden-Elektrolyt-Anoden-Einheit (1) eine Festelektrolyt-Membran für eine Hochtemperaturbrennstoffzelle umfasst.

3. Wiederholeinheit nach einem der Ansprüche 1 oder 2, **dadurch gekennzeichnet, dass** an einer Anodenseite und/oder an einer Kathodenseite der Kathoden-Elektrolyt-Anoden-Einheit (1) anliegend ein leitfähiges poröses Kontaktelement (5) zum Vermitteln eines elektrischen Kontakts zwischen der Kathoden-Elektrolyt-Anoden-Einheit (1) und der ersten Lage (2) der Interkonnektorplatte oder einer Interkonnektorplatte einer nächsten Wiederholeinheit angeordnet ist.

4. Wiederholeinheit nach Anspruch 3, **dadurch gekennzeichnet, dass** das poröse Kontaktelement (5) aus Nickel-Schaum, einem anderen porösen Metallsubstrat, einem Cermet-Substrat oder einem Drahtgeflecht gefertigt ist.

5. Wiederholeinheit nach einem Ansprüche 1 bis 4, **dadurch gekennzeichnet, dass** die erste Lage (2) der Interkonnektorplatte aus einem ungeformten Blech gefertigt und vollständig eben ist.

6. Wiederholeinheit nach einem Ansprüche 1 bis 5, **dadurch gekennzeichnet, dass** die mindestens eine weitere Lage (3, 4) aus Blech oder aus Keramik gefertigt ist.

7. Wiederholeinheit nach einem Ansprüche 1 bis 6, **dadurch gekennzeichnet, dass** aufeinander folgende Lagen (2, 3, 4) der Interkonnektorplatte sowie die Kathoden-Elektrolyten-Anodeneinheit (1) und eine daran anliegende Lage (3) der Interkonnektorplatte durch Glaslot und/oder durch Metaillot miteinander verbunden sind.

8. Wiederholeinheit nach einem Ansprüche 1 bis 7, **dadurch gekennzeichnet, dass** sie auf einer den genannten Lagen (2, 3) der Interkonnektorplatte abgewandten Seite der Kathoden-Elektrolyt-Anoden-Einheit (1) mindestens eine im aktiven Bereich ausgesparte Lage (4') einer nächsten Interkonnektorplatte aufweist, die aus einem ungeformten ebenen Material gebildet und im Randbereich mit der Kathoden-Elektrolyt-Anoden-Einheit (1) verlötet ist.

9. Wiederholeinheit nach einem Ansprüche 1 bis 8, **dadurch gekennzeichnet, dass** die Lagen (2, 3, 4) der Interkonnektorplatte eine Dicke von zwischen 0,1 mm und 1 mm haben.

10. Wiederholeinheit nach einem Ansprüche 1 bis 9, **dadurch gekennzeichnet, dass** ein Kathodensubstrat, ein Elektrolytsubstrat, ein Anodensubstrat oder ein zusätzliches poröses Metallsubstrat als Träger für die Kathoden-Elektrolyt-Anoden-Einheit (1) dient.

11. Stapelanordnung elektrochemischer Zellen, umfassend mindestens zwei Wiederholeinheiten nach einem der Ansprüche 1 bis 10.

## Claims

1. A repetition unit for a stack of electrochemical cells, comprising a cathode/electrolyte/anode unit (1) and also a first layer (2) and at least one further layer (3, 4) of an interconnector plate which lies against the cathode/electrolyte/anode unit (1), the first layer (2) of the interconnector plate being made from electrically conductive material and being in electrical contact with the cathode/electrolyte/anode unit (1), whereas the at least one further layer (3, 4) is cut out in an active region, therein
the at least one further layer (3, 4) consists of an unshaped flat material, also the first layer (2) of the interconnector plate being unshaped at least in an edge region surrounding the active region and the layers (2, 3, 4) of the interconnector plate having in the edge region cutouts (7, 8) for supplying reactant or for removing reaction product, **characterised in that** the cathode/electrolyte/anode unit (1) and also all the aforementioned layers (2, 3, 4) of the interconnector plate are soldered together in the edge region surrounding the active region and the cathode/electrolyte/anode unit (1) has in the edge region cutouts (7, 8) for supplying reactant or for removing reaction product.

2. A repetition unit according to Claim 1, **characterised in that** the cathode/electrolyte/anode unit (1) comprises a solid electrolyte membrane for a high-temperature fuel cell.

3. A repetition unit according to one of Claims 1 or 2, **characterised in that** a conductive porous contact element (5) for enabling an electrical contact between the cathode/electrolyte/anode unit (1) and the first layer (2) of the interconnector plate or an interconnector plate of a next repetition unit is arranged lying against an anode side and/or against a cathode side of the cathode/electrolyte/anode unit (1).

4. A repetition unit according to Claim 3, **characterised in that** the porous contact element (5) is made from nickel foam, another porous metal substrate, a cermet substrate or a wire mesh.

5. A repetition unit according to one Claims 1 to 4, **characterised in that** the first layer (2) of the interconnector plate is made from an unshaped metal sheet and is completely flat.

6. A repetition unit according to one Claims 1 to 5, **characterised in that** the at least one further layer (3, 4) is made from metal sheet or from ceramic.

7. A repetition unit according to one Claims 1 to 6, **characterised in that** successive layers (2, 3, 4) of the interconnector plate and also the cathode/electrolyte/anode unit (1) and a layer (3) of the interconnector plate which lies against it are joined together by glass solder and/or by metal solder.

8. A repetition unit according to one Claims 1 to 7, **characterised in that** it has on a side of the cathode/electrolyte/anode unit (1) remote from the aforementioned layers (2, 3) of the interconnector plate at least one layer (4'), a cut out in the active region, of a next interconnector plate which is formed from an unshaped flat material and is soldered in the edge region to the cathode/electrolyte/anode unit (1).

9. A repetition unit according to one Claims 1 to 8, **characterised in that** the layers (2, 3, 4) of the interconnector plate have a thickness of between 0.1 mm and 1 mm.

10. A repetition unit according to one Claims 1 to 9, **characterised in that** a cathode substrate, an electrolyte substrate, an anode substrate or an additional porous metal substrate serves as support for the cathode/electrolyte/anode unit (1).

11. A stacked arrangement of electrochemical cells, comprising at least two repetition units according to one of Claims 1 to 10.

## Revendications

1. Unité répétitive pour un empilement de cellules électrochimiques, comprenant une unité cathode-électrolyte-anode (1), ainsi qu'une première couche (2) et au moins une autre couche (3, 4) d'une plaque d'interconnexion s'appliquant sur l'unité cathode-électrolyte-anode (1), dans laquelle la première couche (2) de la plaque d'interconnexion est formée d'un matériau électroconducteur et est en contact électrique avec l'unité cathode-électrolyte-anode (1), tandis que la au moins une autre couche (3, 4) est évidée dans une zone active,
la au moins une autre couche (3, 4) étant constituée d'un matériau plan non façonné, dans laquelle la première couche (2) de la plaque d'interconnexion est également non façonnée au moins dans une zone de bord entourant la zone active et les couches (2, 3, 4) de la plaque d'interconnexion présentent dans la zone de bord des évidements (7, 8) pour un acheminement de réactifs ou une évacuation de produit réactionnel,
**caractérisée en ce que** l'unité cathode-électrolyte-anode (1), ainsi que toutes les couches citées (2, 3, 4) de la plaque d'interconnexion, sont brasées l'une à l'autre dans la zone de bord entourant la zone active et l'unité cathode-électrolyte-anode (1) présente dans la zone de bord des évidements (7, 8) pour un acheminement de réactifs ou une évacuation de produit réactionnel.

2. Unité répétitive selon la revendication 1, **caractérisée en ce que** l'unité cathode-électrolyte-anode (1) comprend une membrane à électrolyte solide pour une pile à combustible à température élevée.

3. Unité répétitive selon l'une quelconque des revendications 1 ou 2, **caractérisée en ce qu'**un élément de contact (5) poreux conducteur destiné à transmettre un contact électrique entre l'unité cathode-électrolyte-anode (1) et la première couche (2) de la plaque d'interconnexion ou d'une plaque d'interconnexion d'une unité répétitive suivante est aménagé adjacent à un côté anodique et/ou à un côté cathodique de l'unité cathode-électrolyte-anode (1).

4. Unité répétitive selon la revendication 3, **caractérisée en ce que** l'élément de contact poreux (5) est formé d'une mousse de nickel, d'un autre substrat métallique poreux, d'un substrat de type cermet ou d'un treillis métallique.

5. Unité répétitive selon l'une quelconque des revendications 1 à 4, **caractérisée en ce que** la première couche (2) de la plaque d'interconnexion est formée d'une tôle non façonnée et est complètement plane.

6. Unité répétitive selon l'une quelconque des revendications 1 à 5, **caractérisée en ce que** la au moins une autre couche (3, 4) est formée d'une tôle ou d'une céramique.

7. Unité répétitive selon l'une quelconque des revendications 1 à 6, **caractérisée en ce que** les couches successives (2, 3, 4) de la plaque d'interconnexion, ainsi que l'unité cathode-électrolyte-anode (1) et une couche (3), qui y est appliquée, de la plaque d'interconnexion sont raccordées l'une à l'autre par un apport de verre et/ou un apport de métal.

8. Unité répétitive selon l'une quelconque des revendications 1 à 7, **caractérisée en ce que**, sur un côté, opposé aux couches citées (2, 3) de la plaque d'interconnexion, de l'unité cathode-électrolyte-anode (1), elle présente au moins une couche (4') évidée dans la zone active d'une plaque d'interconnexion suivante qui est formée d'un matériau plan non façonné et qui est brasée dans la zone de bord avec l'unité cathode-électrolyte-anode (1).

9. Unité répétitive selon l'une quelconque des revendications 1 à 8, **caractérisée en ce que** les couches (2, 3, 4) de la plaque d'interconnexion ont une épaisseur comprise entre 0,1 mm et 1 mm.

10. Unité répétitive selon l'une quelconque des revendications 1 à 9, **caractérisée en ce qu'**un substrat de cathode, un substrat d'électrolyte, un substrat d'anode ou un substrat métallique poreux supplémentaire sert de support pour l'unité cathode-électrolyte-anode (1).

11. Empilement de cellules électrochimiques, comprenant au moins deux unités répétitives selon l'une quelconque des revendications 1 à 10.
